# EUROPEAN PATENT SPECIFICATION

(11) **EP 0 467 644 B1**
(45) Date of publication and mention of the grant of the patent: **18.12.1996**
(21) Application number: 91306439.0
(22) Date of filing: 16.07.1991
(51) Int. Cl.: G03B 17/30, G03B 17/26

(54) **Film magazine and camera for loading the same**
Filmmagazin und Kamera zum Laden desselben
Magasin de film et caméra pour son chargement

(30) Priority: 16.07.1990 JP 185415/90
(43) Date of publication of application: 22.01.1992
(73) Proprietor: NIKON CORPORATION, Tokyo (JP)
(72) Inventor: Ezawa, Akira, Setagaya-ku, Tokyo (JP)
(74) Representative: Burke, Steven David

(56) References cited:
- EP-A- 0 414 037
- EP-A- 0 427 922
- DE-A- 3 210 882
- US-A- 4 338 015
- US-A- 4 887 110
- US-A- 4 965 600
- US-A- 4 994 828

## Description

### BACKGROUND OF THE INVENTION

### Field of the Invention

The present invention relates to a film magazine which contains a photographic film wound around a spool in the form of a roll and a camera in which said film magazine is loaded. More particularly, this invention relates to a film magazine with a function capable of indicating the film use status distinguishing whether the film is unused, the magazine is removed when the film is partly used, or the film is used up (fully exposed), and a camera in which said film magazine is loaded.

### Related Background Art

In general, a photographic film is handled in a state contained in a magazine which is a simple container with light shielding function, whereby it is well protected from exposure to light at the loading into the camera, removal therefrom, or during storage or transportation.

In such film magazine, it is sometimes necessary to identify whether the film contained in the magazine is unused or already exposed. In the conventional 35-mm film magazine, whether the film inside is unused or exposed has been determined by whether the end portion of the film stickes out of the slot of the film magazine. That is to say, when the film is rewound at the end of phototaking operations, the film is usually wound into the magazine, including the end portion, so that whether the film is unused or exposed can be distinguished from the above-mentioned fact.

However the distinguishing of the film use status by whether the film end portion stickes out of the magazine necessitates to securely rewind the film end portion into the magazine at the film rewinding operation after the phototaking operations, and lacks certainty because such rewinding operation is unreliable. Particularly if the film magazine with the exposed film, with the film end portion sticking out of the magazine for some reason, is taken out of the camera and stored, it may be mistaken as an unused film magazine. Such film magazine, if loaded in the camera, allows phototaking operations in the usual manner, the problem of double exposure is unavoidable.

Besides some photographers do not expose the film loaded in the camera up to the last frame but rewind it in the middle of feeding and extract it from the camera, for re-loading in the camera and exposing the remaining portion of the film at a later time. In such case, the rewinding is carefully conducted so as not to wind the film end portion into the magazine. In this case, since the magazine always has the end portion of the film sticking out, it cannot be distinguished from the new magazine containing an unused film therein.

For this reason there is sometimes employed a method of writing the use status of the film on the magazine or on a case therefor, but such method is inevitably cumbersome and there has been desired a measure for resolving such drawbacks.

Also a magazine for containing a film is proposed, for example, in the U.S. Patent No. 4,832,275, wherein the film end is always drawn into the magazine when it is not loaded. In such magazine, the distinguishing method using the film, in the foregoing 35-mm film magazine, cannot be adopted. Also the phototaking operations are possible even when a used magazine is loaded, so that the above-mentioned problem of double exposure has not been unavoidable.

Reference is also made under Article 54 (3) EPC to EP-A-0427922 which relates to a camera apparatus for preventing loading of exposed film. The specification describes a camera to be used with a light-tight cassette which is inherently capable of automatically advancing a film strip from the cassette shell whether the film strip is generally unexposed, partly exposed or substantially completely exposed. The cassette has a status indicator for providing a visible indication of the exposed status of the film strip. A sensing block member is included in the camera to cooperate with the status indicator to prevent cassette loading into the camera, in one embodiment, only when the status indicator indicates that the film strip is completely exposed, and in another embodiment, either when the status indicator indicates that the film strip is partly exposed or it indicates that the film strip is completely exposed.

### SUMMARY OF THE INVENTION

The present invention is defined in the claims.

With the present invention, a film magazine and a camera can be provided which, using a simple structure, can confirm the film use status, such an unused state, partly used state, or an unexposed stated.

Referring to the preferred embodiment, with a film magazine in accordance with the invention, the spool is stopped at an appropriate rotational position to indicate the film used status for when the magazine is not loaded in the camera.

In the preferred embodiment, the camera controls the rotational position of the spool to give an indication of the film used status prior to the extraction of the magazine from the camera. The camera is provided with a loading inhibition device for inhibiting the loading of the magazine into the camera according to the film used status.

### BRIEF DESCRIPTION OF THE DRAWINGS

Figs. 1A, 1B and 1C are schematic plan views showing the state of use of a first embodiment of the film magazine of the present invention;
Fig. 2 is a perspective view of a film rewinding mechanism of the camera;
Fig. 3 is a schematic exploded perspective view of a part of the magazine;
Fig. 4 is a cross sectional view of the magazine along a line IV-IV in Fig. 6;
Fig. 5 is a cross sectional view of the magazine along a line V-V in Fig. 6;
Fig. 6 is a cross sectional view of the magazine along a lien VI-VI in Fig. 4;
Fig. 7 is a cross sectional view of the magazine along a line VII-VII in Fig. 4;
Fig. 8 is a block diagram showing a spool drive unit and a controller of the camera;
Fig. 9 is a flow chart showing the function of the devices shown in Fig. 8;
Fig. 10 is a cross sectional view along a line R1-R1 in Fig. 7;
Fig. 11 is a cross sectional view along a line R2-R2 in Fig. 7;
Fig. 12 is a cross sectional view along a line R3-R3 in Fig. 7;
Figs. 13 and 14 are views showing configuration and function for loading inhibition of the magazine;
Figs. 15A, 15B and 15C are views showing the states of use of the film magazine of a second embodiment;
Figs. 16 and 17 are views showing a part of the structure of the film magazine of the second embodiment;
Fig. 18 is a schematic perspective view showing the structure of the film magazine and the camera of the second embodiment;
Figs. 19A, 19B and 19C are views showing the states of use of the film magazine of a third embodiment;
Figs. 20 and 21 are views showing a part of the structure of the film magazine of the third embodiment; and
Figs. 22, 23A and 23B are views showing a part of the structure of a camera of the third embodiment.

### DESCRIPTION OF THE PREFERRED EMBODIMENTS

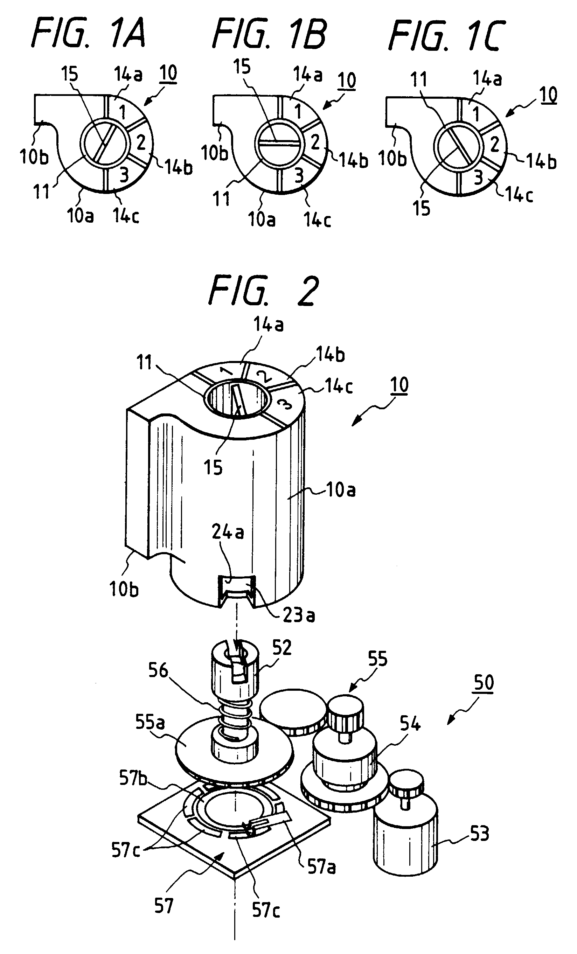

Figs. 1A, 1B and 1C illustrate a film magazine 10 of the present invention, in which, as disclosed in the U.S. Patent No. 4,832,275, the film end is contained in the magazine 10 from the beginning, and the film is advanced from the end thereof or rewound by the rotation of a spool 11. The magazine 10 has a form composed of a cylindrical main body 10a and a lip-type film feeder 10b protruding from a part of the main body 10a, and consists of two-divided cases 12, 13. Internally a storage space for the unrepresented film to be wound around the spool 11 is formed, and a film feeding mechanism (not shown) is provided therein but the details are omitted.

According to the present invention, in the aforesaid film magazine, about half of the circumference of the top end surface is divided into three portions, which are printed with "1", "2" and "3" as display symbols 14a, 14b, 14c, serving as plural (three in this embodiment) display portions indicating the use status of the film contained in the magazine 10. A key 15 at the top end of the spool 11, rotating with the movement of the spool 11, is used as pointing means for indicating the film use status by pointing to one of the display symbols 14a, 14b and 14c depending on the rotational stop position of the spool 11. The magazine is featured by a structure capable of indicating the film use status, namely unused (unexposed), extracted in the middle or used (exposed), by the combination of said key 15 and said display symbols 14a, 14b and 14c.

The above-mentioned display symbols "1", "2" and "3" (14a, 14b, 14c) respectively represent an entirely unused (unexposed film, a film which is exposed by at least a frame but not to the last frame and taken out in such partly used state from the camera, and a used (exposed) film exposed to the last frame. Figs. 1A, 1B and 1C respectively show the states indicating these symbols. Said display symbols may be replaced, for example, by "unused", "partly used" and "used", or other symbols.

In the status "2" or "extracted in the middle", the magazine 10 may be reloaded in the camera and the phototaking operation may be continued in the unexposed portion of the film, by providing a camera 40A and the magazine 10 with means for recording and storing information on the number of already exposed frames, and for transmitting said information to the camera in which said film is reloaded. More specifically, the camera 40A may be provided with means for recording and reading the information, and the magazine 10 may be provided with a recording medium capable of recording said information, such as a EEPROM, a RAM or a magnetic recording medium.

However such configuration is not essential. If a camera 40B is of the simplified type, information recording mentioned above is not conducted, and the film extracted in the middle may be developed without reloading that may cause double exposure.

Thus the magazine of the present invention is usable in two cameras 40A, 40B which are distinguished by the ability of information recording, and the displays may be made according to the kinds of such cameras. In case of the camera 40A capable of information recording, the loading of the magazine into the magazine chamber 41 of the camera should be permitted at the status "1" or "2" but inhibited at the status "3", and, in case of the camera 40B incapable of information recording, the loading into the magazine chamber 41 should be permitted only in the status "1".

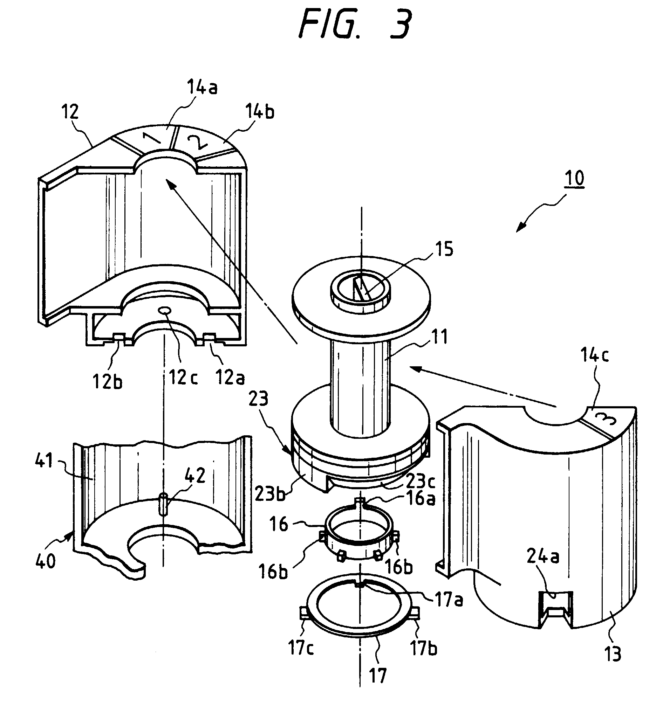

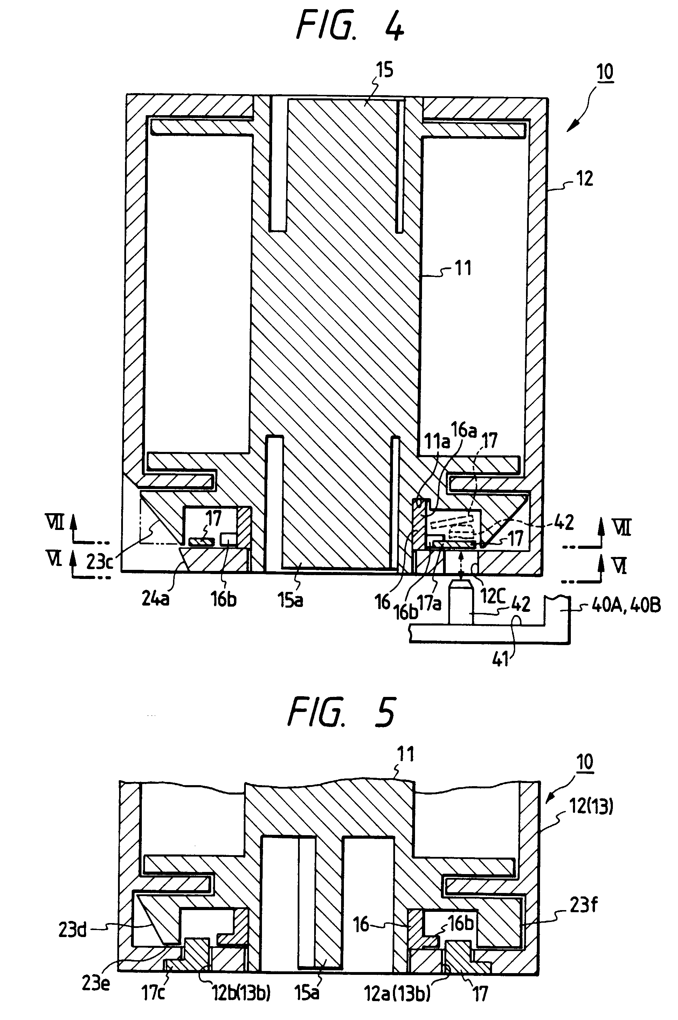

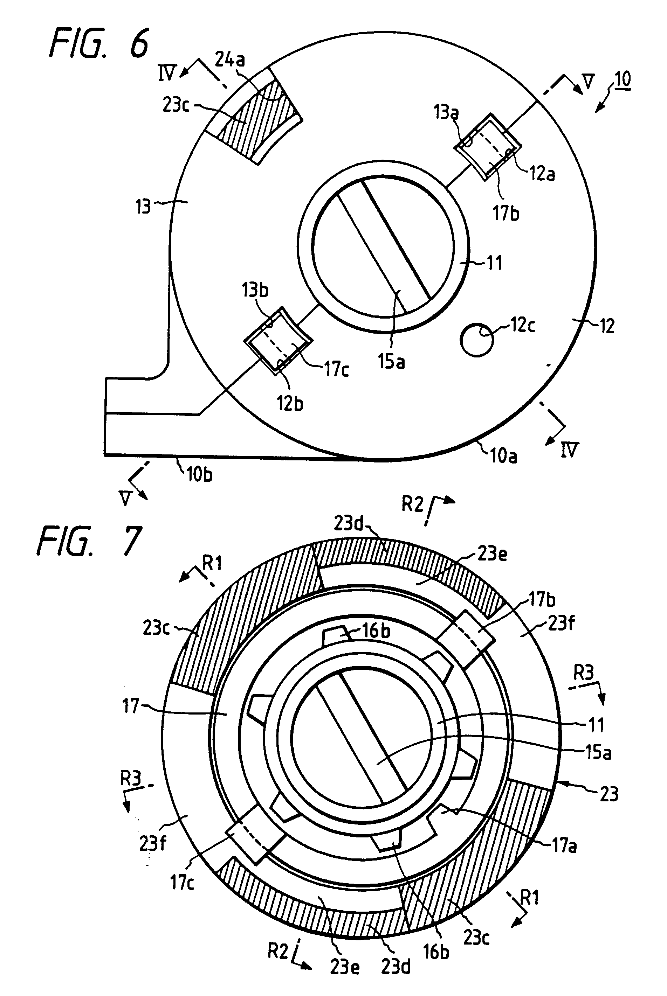

Furthermore, in the present embodiment, there is provided means for restraining the pointing position of the key 15 except for the loaded state in the camera 40A or 40B. Referring to Figs. 3 to 5, there are shown a ring 16 engaged with the lower part of the spool 11 in the lower portion of chamber of the magazine 10; a protrusion 16a engaging with a groove 11a formed in the lower part of the spool for rotating the ring 16 and the spool 11 integrally; a stoppage ring 17, made of a spring material, positioned outside said ring 16, being provided on the internal circumference with a claw 17a for selectively engaging with protrusions 16b of said ring 16, and being further provided on the outer circumference with hooks 17b, 17c for being retained in hook grooves 12a, 12b, 13a, 13b formed on the lower junction of the cases 12, 13 constituting the magazine 10 as shown in Fig. 5. As will be apparent from Fig. 4, when the magazine 10 is not loaded, the claw 17a is in a position capable of engaging with the stoppage protrusions 16b of the ring 16, thereby limiting the rotation of the spool 11. In this state, as shown in Fig. 7, the spool can rotate within an interval between plural stoppage protrusions 16b of the ring 16, and the movement of the spool 11 is restrained within said interval when the rewinding operation is over. This is to restrain the key 15 provided on the spool 11 with a pointed area with display symbol 14a, 14b or 14c. More specifically, said limitation in rotation is to prevent the displacement of the pointing position of the key 15, for example from "1" to "2" or "3" by the rotation of the spool 11 when the magazine is not loaded.

In the aforesaid configuration, when the magazine 10 is loaded in the magazine chamber 41, a restriction release pin 42 protruding from the bottom thereof fits into a hole 12c of the magazine 10 and pushes up the stoppage ring 17 against the spring elasticity thereof as shown by imaginary line in Fig. 4, thereby maintaining the claw 17a in a position not engaging with the stoppage protrusions 16b and thus allowing free rotation of the spool 11. In such state the stoppage ring 17 is securely supported by the cases 12, 13 without useless friction or load to the rotation of the spool 11.

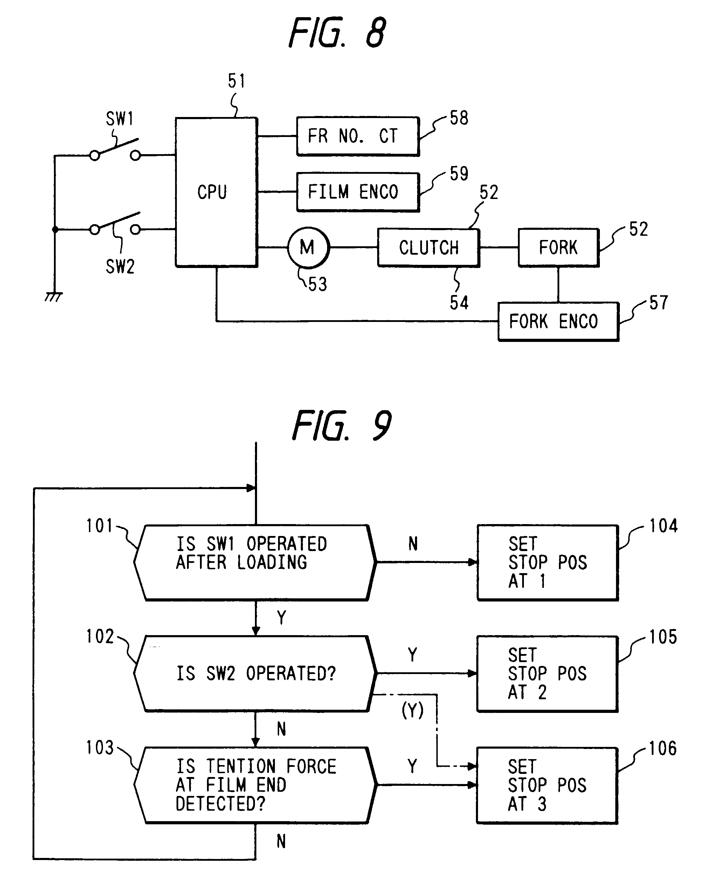

The camera 40A or 40B of the present invention, for loading the above-explained film magazine 10, is provided with a spool drive unit 50 for rotating the spool 11 of the magazine 10 and a controller 51 for controlling the rotational stop position of the spool 11 by said drive unit 50 according the film use status, as shown in Figs. 2 and 8. Referring to Fig. 2, a fork 52, engaging with a key 15a formed in the lower side of the spool 11 corresponding to the upper key 15 constituting the aforementioned pointing means and rotating integrally with said key 15, is driven by a film rewinding motor 53 through a reducing gear mechanism 55 having a clutch 54, thereby rotating the spool 11 in the rewinding direction. A known fork withdrawal mechanism 56 is provided for correcting the aberration between the key 15a and the fork 52 at the loading of the magazine 10, and the fork 52 and the key 15a are mutually disconnected at the film winding operation.

The rotational position of said fork 52 is detected by a fork encoder 57, consisting of a brush 57a integrally rotating with a final fork gear 55a of the reducing gear mechanism 55, a common pattern 57b formed on a board, and segment patterns 57c. Referring to Fig. 8, there are shown a shutter release switch SW1; and a middle rewind switch SW2 to be actuated for rewinding the film before the last frame is exposed. When the film is exposed to the last frame, the rewinding operation is automatically started by detecting the tension at the film end as already known. 58 is a frame number counter which counts the number of frames exposed. 59 is a film encoder which detects the amount of film moved, and is used for feeding the film frame by frame. The information obtained by these units is sent to a central processing unit CPU, and the rotational stop position of the fork 52 by the motor 53 is controlled according to the result obtained in said CPU.

In the above-explained configuration, at the end of film winding operation, the controller 51 of the camera 40A or 40B discriminates the film use status and controls the spool 11 at the corresponding position, according to a sequence as shown in Fig. 9. At first a step 101 discriminates whether the shutter release switch SW1 has been actuated after the loading of the magazine, and, if not, the sequence proceeds to a step 104 for controlling the stop position at "1", but, if actuated, the sequence proceeds to a step 102 for discriminating whether the middle rewind switch SW2 has been actuated. If actuated, the sequence proceeds to a step 105 for controlling the stop position of the key 15 at "2", but, if not actuated, a step 103 discriminates whether the tension at the film end has been detected. If detected, a step 106 controls the stop position at "3", but, if not detected, the sequence returns to the step 101. In case a magazine 10 not equipped with information recording means is combined with the camera 40B, the sequence may be so constructed as to proceed to the step 106 when the step 102 identifies the actuation of the switch SW2. Also the step 103 may be replaced by an operation of reading the available frame number of the film and discriminating whether the count of the frame number counter 58 coincides with said available frame number.

The aforementioned stop position of the key 15 of the spool 11 has, as will be apparent from Fig. 7, a certain angular tolerance in relation to the display portions, and the control is preferably conducted in such a manner that the spool 11 stops within said angular tolerance. The angle of the patterns 57c in the fork encoder 57 shown in Fig. 2 is so formed as to coincide with the angular stop range of the spool 11 including such tolerance, and the control operation may be conducted in such a manner, after the spool 11 is stopped, as to detect whether the brush 57a is positioned on a predetermined pattern 57c, and, if not, to conduct the rotation again.

The above-explained configuration, though simple in structure, allows to securely identify the film use status, such as the unused, extracted in the middle or used (exposed) as represented by the display "1", "2" or "3" by looking at the upper end portion of the magazine, thereby achieving appropriate administration of the films and completely avoiding the conventional drawbacks such as double exposure resulting from the loading of a used magazine into the camera.

Also the present embodiment is featured by a fact that the film magazine 10 is provided, on an external part thereof (a lateral part at the lower end in the present embodiment), with engaging means which assumes one of engaging and non-engaging states according to the film use status thereby permitting or inhibiting the loading of the magazine 10 into the magazine chamber 41 of the camera 40, and that the camera 40 for loading said magazine 10 is provided means for varying said engaging means of the magazine 10 into the engaging or non-engaging state according to the film use state (by the rotation of the spool 11 in the present embodiment), and a means for permitting the loading of said magazine 10 into the magazine chamber 41 when said engaging means is in the non-engaging state and inhibiting said loading when said engaging means is in the engaging state.

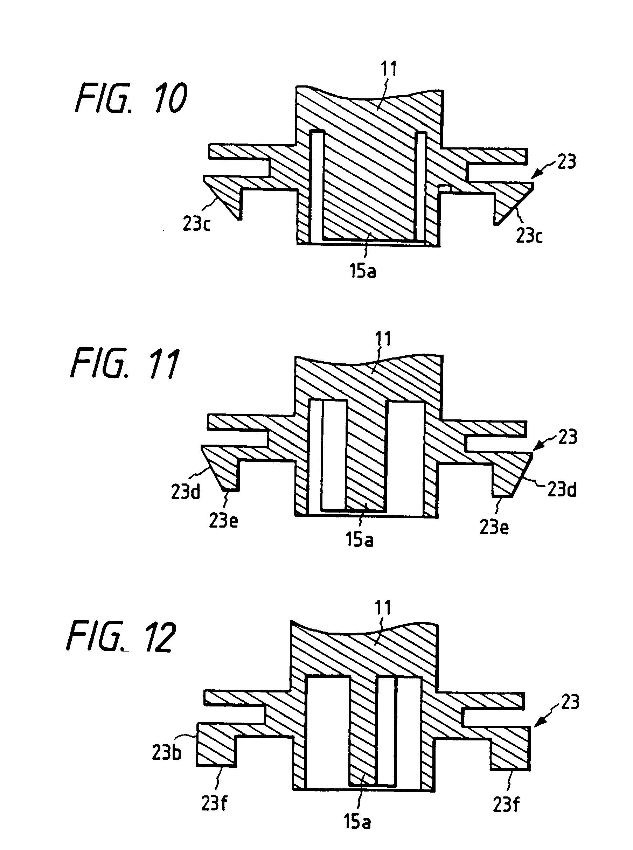

As shown in Fig. 6, the case 13 is provided with a window 24a. On the other hand, a fitting face 23 is divided into six equal sectors, which, as shown in Fig. 7, are in succession composed of a radially continuous sloped face 23c, a non-sloped face 23e and a radially outside sloped face 23d, and a radially continuous sloped face 23f. This configuration will be understood from Figs. 10, 11 and 12 which are respectively sectioned at R1, R2 and R3 in Fig. 7. The aforementioned Fig. 6 shows a state in which the magazine 10 is in the status "1".

In each status of the magazine of the configuration explained above, the fitting face 23 exposed in the window 24a is shown in Table 1.

**Table 1**

| Status | Window 24a |
|---|---|
| 1 | Sloped face 23c |
| 2 | Non-sloped face 23e and sloped face 23d |
| 3 | Non-sloped face 23f |

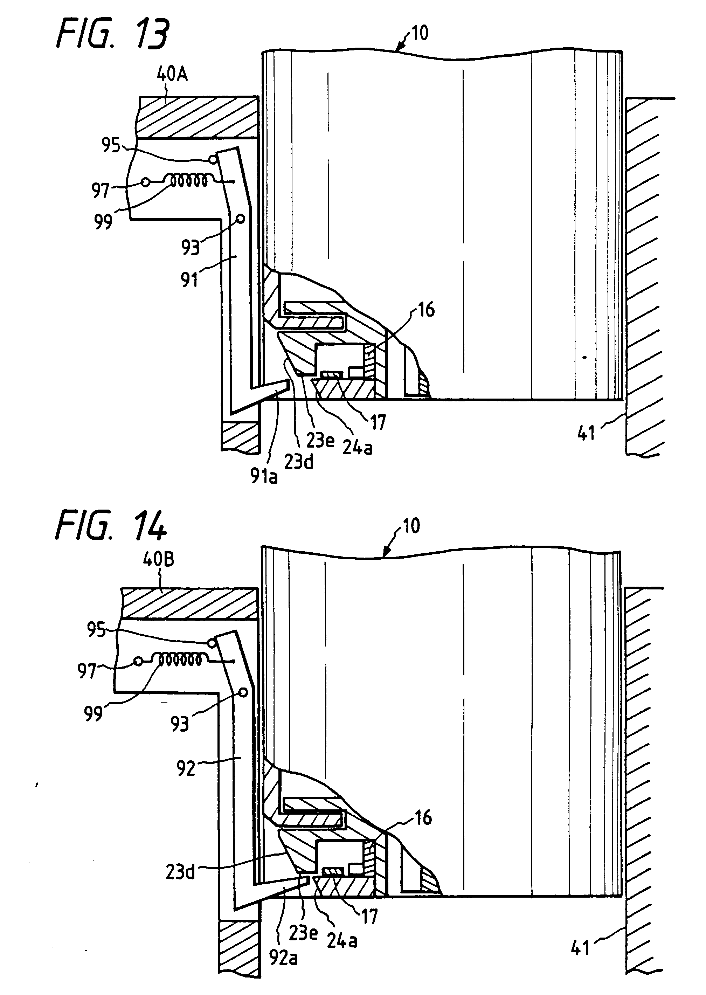

In the following explained is the loading inhibition means provided in the magazine chamber 41 of the cameras 40A, 40B, with reference to Figs. 13 and 14. In a wall portion where the window 24a passes through at the loading of the magazine 10 into the magazine chamber 41, the camera 40A is provided with an inhibition lever 91 while the camera 40B is provided with an inhibition lever 92. Each of said levers is rotatably supported by a fixed pin 93, closewise biased by a spring 99 mounted on another pin 97, and is limited in rotation by a limiting pin 95. Said levers 91, 92 are respectively provided, at the lower end thereof, with a short protrusion 91a and a long protrusion 92a. The lengths of said protrusions 91a, 92a are so determined, when a magazine 10 of the status "2" in which the non-sloped face 23e and the sloped face 23d are exposed in the window 24a as shown in Figs. 13 and 14, that the protrusion 91a of the inhibition lever 91 of the camera 40A comes into contact only with the sloped face 23d, while the protrusion 92a of the inhibition lever 92 of the camera 40B extends to and engages with the non-sloped face 23e.

When a magazine 10 of the status "1" is loaded for example in the camera 40A, and the film is rewound after exposure of all the frames, the magazine 10 becomes the status "3". While said magazine 10 is not yet taken out from the camera 40A, the protrusion 91a is pushed by the face 23b, whereby the lever 91 is in a position rotated clockwise about the shaft 93 from the state shown in Fig. 13. When the magazine 10 is taken out from the camera 40A, the lever 91 returns to the position shown in Fig. 13. Thus, even if the user tries to load the magazine 10 of the status "3" into said camera, said loading is inhibited since the face 23f impinges on the protrusion 91a. The lever 92 of the camera 40B also functions in a similar manner.

Because of the configuration of the magazine 10 and the cameras 40A, 40B in the present embodiment, following functions are attained at the loading of the magazine of different statusses.

In case of the magazine of the status "1" in which the sloped face 23c is exposed in the window 24a, the inhibition lever 91 or 92 of the camera 40A or 40B comes into contact by the protrusion 91a or 92a with said sloped face 23c, and is rotated clockwise against the biasing force of the spring 99 at the loading operation of the magazine 10, whereby the loading of said magazine 10 is permitted in either of the cameras 40A and 40B.

In case of the magazine of the status "2" in which the non-sloped face 23e and the sloped face 23d are exposed in the window 24a, and in the camera 40A, the inhibition lever 91 whose protrusion 91a is in contact with the sloped face 23d is rotated clockwise by the action of said sloped face 23d against the biasing force of the spring 99, whereby the loading of the magazine 10 is permitted. On the other hand, in the camera 40B, the protrusion 92a of the inhibition lever 92 engages with the non-sloped face 23e, so that the loading of the magazine 10 is inhibited.

Also in case of the magazine of the status "3" in which the non-sloped face 23f is exposed in the window 23f, the protrusion 91a or 92a of the inhibition lever 91, 92 of the camera 40A, 40B engages with the non-sloped face 23f, whereby the loading the magazine 10 is inhibited in either of the cameras 40A and 40B.

As explained above, this embodiment can attain the effect of magazine loading inhibition as in the foregoing embodiments, by providing only one loading inhibition means in either of the cameras 40A and 40B, and is therefore advantageous in the construction of the camera.

The loading inhibition means in the camera 40A or 40B is composed of an inhibition lever, but it is naturally possible also, as in the first embodiment, to use a retractable loading inhibition pin, biased by a spring, and to select the amount of protrusion of said pin shorter or longer respectively in the camera 40A or 40B, corresponding to the lengths of the protrusions 91a, 92a of the inhibition pins 91, 92.

Figs. 15A, 15B, 15C, 16 and 17 illustrate another embodiment of the present invention, wherein a loading inhibition means is provided in each of the cameras 40A, 40B.

In the following there will be explained the difference of the magazine 10 of this embodiment from that in the first embodiment. In the foregoing first embodiment, about a half of the circumference of the upper end face of the magazine 10 is divided into three portions, which are respectively allotted to "1", "2" and "3" as shown in Fig. 1. In this embodiment, about a half of said circumference is divided into four portions, of which three are allotted to the statusses "1", "2" and "3" while the remaining one is not used. The function of the key 15 as pointing means is same as in the first embodiment.

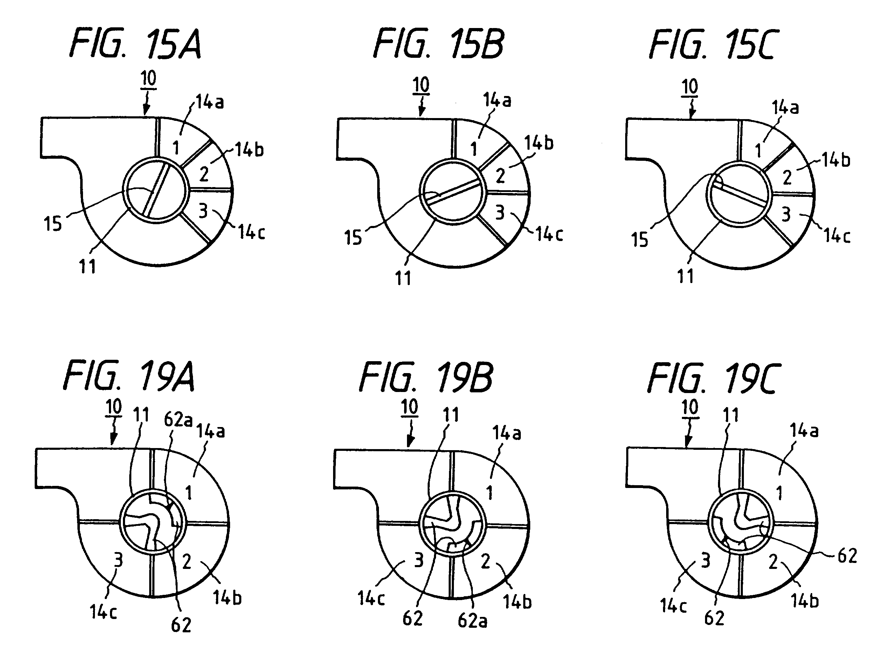

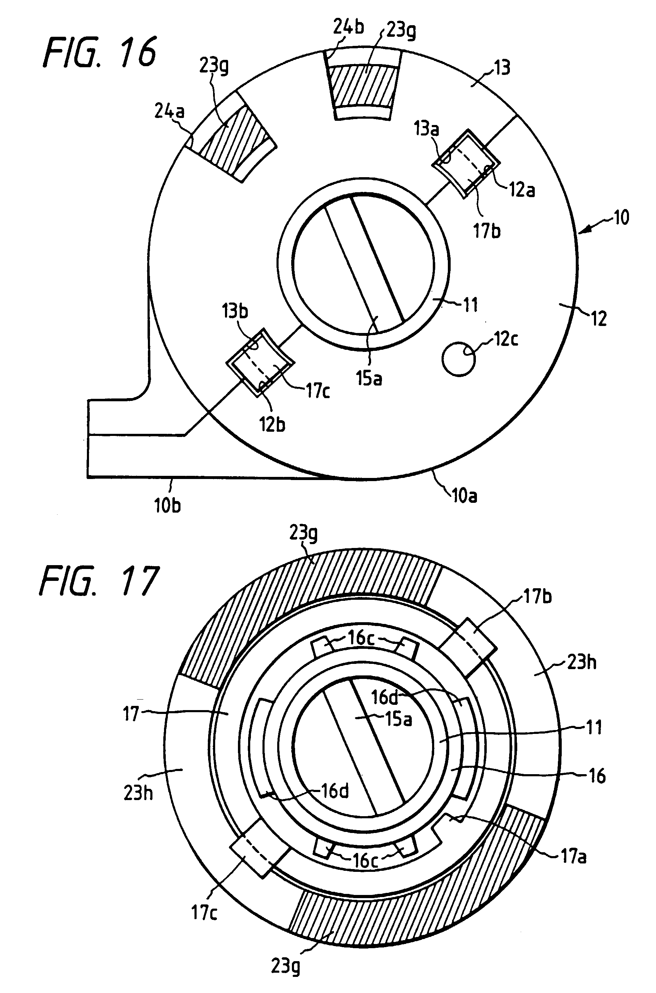

In the lower part of the case 13, as shown in Fig. 16, there are formed windows 24a, 24b with a mutual angular distance of about 45°, while the fitting face 23 is provided, as shown in Fig. 17, with sloped faces 23g and non-sloped faces 23h, each in an angular range of about 90°, and similar in shape to the sloped face 23a and non-sloped face 23b in the first embodiment. Also the protrusions 16c, 16d of the ring 16 for preventing the change in the pointed position when the magazine 10 is unloaded are formed, as shown in Fig. 17, in positions for constraining the spool 11 in such a manner that the spool 11 does not rotate among three states shown in Figs. 15A, 15B and 15C when the magazine is not loaded.

In the above-explained configuration, the fitting face 23 exposed in the windows 24a, 24b in each status of the magazine 10 is shown in Table 2.

**Table 2**

| Status | Window 24a | Window 24b |
|---|---|---|
| 1 | Sloped face 23g | Sloped face 23g |
| 2 | Sloped face 23g | Non-sloped face 23h |
| 3 | Non-sloped face 23h | Non-sloped face 23h |

Fig. 16 shows the status "1".

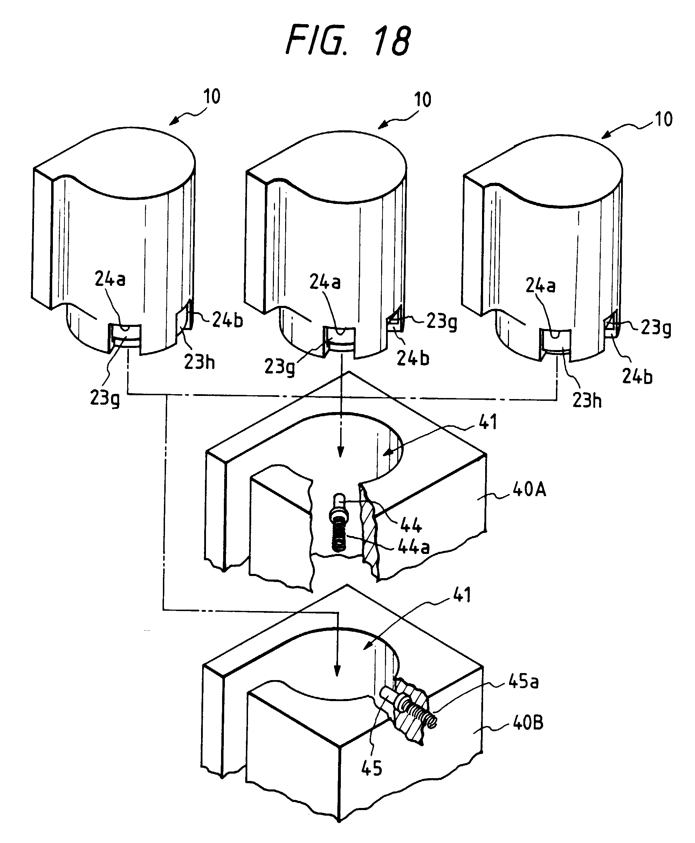

The fork encoder 57 for controlling the rotational stop position of the fork 52 in the camera 40A or 40B at the end of rewinding operation is so constructed as to stop the spool 11 in the appropriate stop portions therefor, but it is merely different from that of the first embodiment in angular positions of the segment patterns 57c (cf. Fig. 2) and will not, therefore, be illustrated. As regards the loading inhibition pin for inhibiting the loading of the magazine 10, in case of the camera 40A, as shown in Fig. 18, an inhibition pin 44 biased by a spring 44a is provided at a position in the chamber 41 where the window 24a passes through at the magazine loading. On the other hand, in case of the camera 40B, an inhibition pin 45 alone, biased by a spring 45a, is provided at a position where the window 24b passes through.

Because of the above-explained configuration of the magazine 10 and the cameras 40A, 40B in this embodiment, there are attained following functions at the loading of the magazine of each status.

With the magazine 10 of the status "1", the loading thereof is permitted in either of the cameras 40A, 40B.

With the magazine 10 of the status "2", the loading is permitted in the camera 40A but is inhibited in the camera 40B.

With the magazine 10 of the status "3", the loading is inhibited in either of the cameras 40A, 40B.

Such configuration is capable of providing the effect of magazine loading inhibition same as in the foregoing embodiments, by providing a loading inhibition means in either of the cameras 40A, 40B, and is therefore advantageous in the construction of the camera.

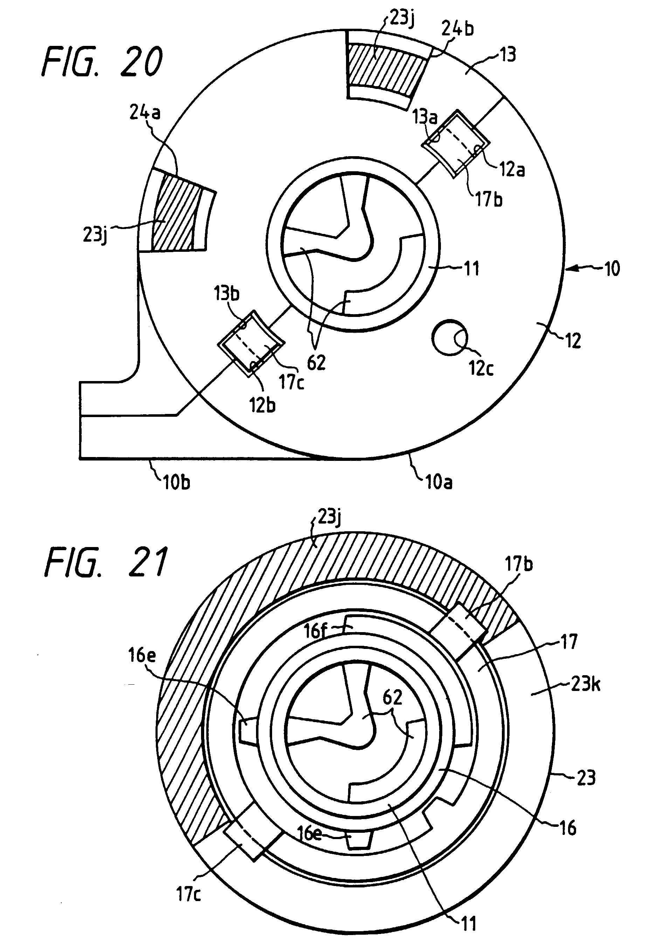

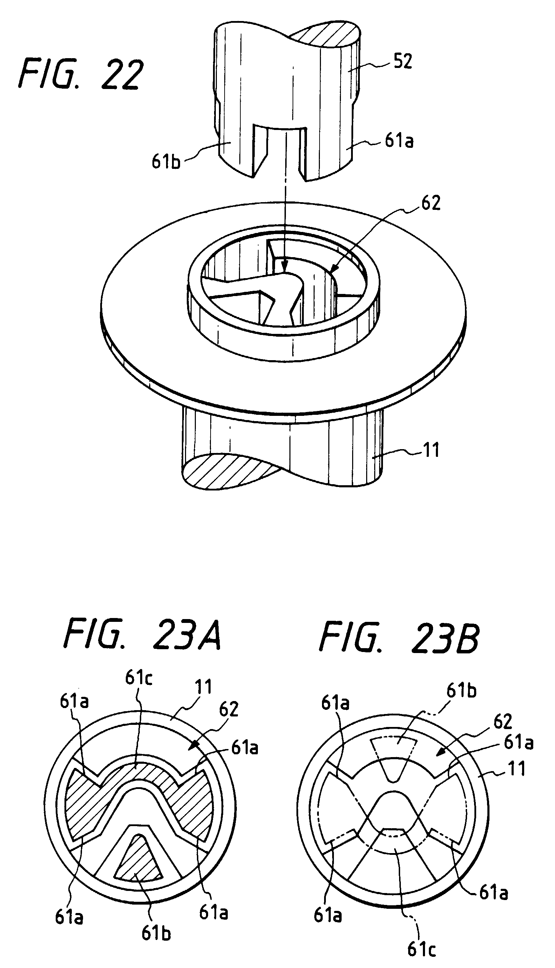

Figs. 19A, 19B, 19C, 20 and 21 illustrate a third embodiment of the present invention, which applies, to configuration of the foregoing second embodiment, a configuration shown in Figs. 22, 23A and 23B in which the spool 11 and the fork 52 mutually engage only in one way with a range of 360°, thereby increasing the angle to be allotted to each of the areas "1", "2" and "3".

Figs. 22, 23A and 23B illustrate a variation in which the engaging part between the fork 52 and the spool 11 is divided into three display portions within a range of 360°. The engaging part of the fork 52 is composed of rotation transmitting parts 61a and miscoupling inhibition parts 61b, 61c, while the engaging part 62 of the spool 11 is in a corresponding form, whereby only one coupling is rendered possible within 360°. With such configuration, 360° can be divided into three areas, with an increased pointing range for each area. Thus there can be employed a rougher accuracy of stopping of the spool in comparison with the foregoing embodiments, and there can be obtained a significant advantage in practice. In the present embodiment, the rotation transmitting parts 61a are so constructed as to enable rotation in both directions, in consideration of a magazine 10 in which the spool 11 is driven in both directions, but such configuration is naturally not restrictive.

The magazine 10 of the present embodiment is different from that of the second embodiment in that, as shown in Figs. 19A, 19B and 19C, the entire circumference of the upper end face of the magazine 10 is divided into four portions, of which three are respectively allotted to the statusses "1", "2" and "3", while the remaining one is not used.

As pointing means, an arrow mark 62a is provided on the upper engaging part 62. On the other hand, as shown in Fig. 20, the case 13 is provided with windows 24a, 24b with a mutual angular distance of about 90°, and the fitting face 23 is provided, as shown in Fig. 21, with a sloped face 23j and a non-sloped face 23k in halves and in similar shapes as the sloped face 23a and the non-sloped face 23b in the first embodiment. Also the protrusions 16e, 16f of the ring 16 for preventing the change in the pointed position when the magazine is unloaded are formed, as shown in Fig. 21, in positions for constraining the spool 11 in such a manner that the spool 11 does not rotate among three states shown in Figs. 19A, 19B and 19C when the magazine is not loaded.

In the above-explained configuration, the fitting face 23 exposed in the windows 24a, 24b in each status of the magazine 10 is shown in Table 3.

**Table 3**

| Status | Window 24a | Window 24b |
|---|---|---|
| 1 | Sloped face 23j | Sloped face 23j |
| 2 | Sloped face 23j | Non-sloped face 23k |
| 3 | Non-sloped face 23k | Non-sloped face 23k |

Fig. 20 shows the position in status "1".

The fork encoder 57 for controlling the rotational stop position of the fork 52 in the camera 40A or 40B at the end of rewinding operation is so constructed as to stop the spool 11 in the appropriate stop portions therefor, but it is merely different from that of the first embodiment in angular positions of the segment patterns 57c (cf. Fig. 2) and will not, therefore, be illustrated. As regards the loading inhibition pin for inhibiting the loading of the magazine 10, as in the second embodiment, in the camera 40A an inhibition pin 44 biased by a spring 44a is provided at a position in the magazine chamber 41 where the window 24a passes through at the magazine loading. On the other hand, in the camera 40B, an inhibition pin 45 alone, biased by a spring 45a, is provided at a position where the window 24b passes through.

Because of the above-explained configuration of the magazine 10 and the cameras 40A, 40B, the present embodiment functions in the identical manner as the foregoing embodiment, and allows to increase the angular ranges "1", "2" and "3", whereby the stop control position of the spool 11 at the end of rewinding operation can be made rougher.

In the above-explained second and third embodiments, the loading inhibition means of the cameras 40A, 40B is composed of a pin, but there may naturally be employed a lever as in the first embodiment.

The present invention is not limited to the foregoing embodiments, but is subject to variations in the form or structure the various components including the form of the magazine 10. For example the foregoing embodiments have been explained by the magazine 10 of a special type in which the film feeding and rewinding are conducted by the rotation of the spool, and cameras 40A, 40B for loading such magazine, but the present invention is also applicable to and effective in ordinary magazine for 35 mm film. Also in the foregoing embodiments the film use status is displayed in three ways (14a, 14b, 14c), but the present invention is not limited to such embodiments.

As explained in the foregoing, according to these embodiments, the film magazine is provided on the external surface thereof with at least two display portions indicating the film use status, and is further provided with pointing means rotating with the spool on which the film is wound and pointing to one of said display portions according to the rotational stop position of said spool thereby indicating the film use status, and means for restraining the movement of said spool bearing said pointing means except when the magazine is loaded in the camera. Also the camera for loading said magazine is provided with a spool drive unit for rotating the spool of said magazine and a controller for controlling the rotational stop position of said spool by said drive unit according to the film use status. Thus, despite a simple configuration, the use status of the film in the magazine, such as "unused", "taken out in the middle of use" or "used (exposed)" can be securely displayed and can be easily identified by merely looking at the external surface of the magazine, whereby the administration of films can be appropriately carried out and there can be prevented the drawbacks in the prior art such as double exposure resulting from mistaken loading of the used film magazine into the camera. The present invention has a particular advantage of utilizing the conventional configuration without any particular structure, by utilizing the spool of magazine as pointing means and also utilizing the rewinding system of the camera for driving said spool. Naturally erroneous status display by eventual rotation of the spool can be avoided by constraining means, provided if necessary, for limiting the rotation of the spool when the magazine is not loaded. Furthermore, since such display is automatically attained by the mechanisms in the magazine and in the cameras, the user is not required to perform any particular operation.

Also according to these embodiments, the magazine is provided, in a part of the external surface thereof, with fitting means which assumes one of the fitting (or blocking) and non-fitting (or non-blocking) states according to the film use status, thereby permitting or inhibiting the loading of the magazine into the camera, and the camera for loading said magazine is provided with means for varying said fitting means of the magazine into the fitting or non-fitting state according to the film use status, and means for permitting or inhibiting the loading of said magazine into the magazine chamber of the camera respectively when said fitting means is in the non-fitting or fitting state. Thus the present invention, despite of the simple configuration, provides various excellent advantages of securely preventing the reloading of a used magazine into the camera, thus securely preventing the drawback of double exposure, by selectively controlling said fitting means of the magazine in the fitting or non-fitting state, at the loading operation of the magazine according to whether the film is unused, was taken out in the middle of use or was already used.

## Claims

1. A film magazine (10) comprising:
a rotatable film spool (11); and
indicator means comprising an indicator member (23) and aperture means (24a; 24a, 24b), the indicator member and the aperture means being movable relative to each other to selectively expose different portions of the indicator member;
wherein the different portions of the indicator member comprise a portion having at least one blocking surface (23f, 23e; 23h; 23k) and a portion having at least one non-blocking surface (23c, 23d; 23g; 23j), and wherein the indicator means is settable in a first state in which a said blocking surface (23f; 23h; 23k) is exposed by the aperture means to indicate that the film has been fully used, in a second state in which both a said non-blocking surface (23d; 23g; 23j) and a said blocking surface (23e; 23h; 23k) are exposed by the aperture means in place of the blocking surface exposed in the first state for indicating that the film is partially used, and in a third state in which a said non-blocking surface (23c; 23g; 23j) is exposed by the aperture means for indicating that the film is completely unused;
whereby loading of the film magazine (10) into a magazine receiving chamber can be mechanically prevented or permitted, in dependence on the state of the indicator means.

2. A film magazine according to claim 1, wherein the aperture means comprises a first exposing region (24a) and a second exposing region (24b) and wherein:
when the indicator member (23) is in said first state, said first exposing region (24a) exposes a said blocking surface (23h; 23k) and said second exposing region (24b) exposes a said blocking surface (23h; 23k);
when the indicator member (23) is in said second state, said first exposing region (24a) exposes a said non-blocking surface (23g; 23j) and said second exposing region (24b) exposes a said blocking surface (23h; 23k); and
when the indicator member (23) is in said third state, said first exposing region (24a) exposes a said non-blocking surface (23g; 23j) and said second exposing region (24b) exposes a said non-blocking surface (23g; 23j).

3. A film magazine according to claim 2, wherein the first and second exposing regions comprise first and second discrete apertures (24a, 24b) located at respective positions.

4. A film magazine according to claim 1, 2 or 3, wherein the indicator member and the exposing means are movable relative to each other by rotation of the spool.

5. A film magazine according to claim 4, wherein the indicator member is coupled to the spool for rotation therewith.

6. A film magazine according to any preceding claim, wherein the or each non-blocking surface (23c; 23d; 23g; 23j) comprises a tapered surface.

7. A combination of a film magazine as defined in claim 1, 2 or 3, and film feeding apparatus, the film feeding apparatus comprising:
a magazine chamber (41) for receiving the film magazine; and
inhibiting means (44; 45; 91; 92) for selectively inhibiting loading of the film magazine into the magazine chamber in dependence on the state of the indicator means.

8. A combination of a film magazine and film feeding apparatus as defined in claim 7, wherein the inhibiting means comprises means (44; 91) for inhibiting loading of the film magazine in association with the detection of a said blocking surface exposed by the indicator means in the first indicating state, and for allowing loading of the film magazine in association with the detection of a said non-blocking surface exposed by the indicator means in the second or third indicating state.

9. A combination of a film magazine and film feeding apparatus, as defined in claim 7, wherein the inhibiting means comprises means (45; 92) for inhibiting loading of the film magazine in association with the detection of a said blocking surface exposed by the indicator means in the first or second indicating state, and for allowing loading of the film magazine in association with the detection of a said non-blocking surface exposed by the indicator means in the third indicating state.

10. A combination of a film magazine as defined in claim 2 or 3, and film feeding apparatus, the film feeding apparatus comprising:
a magazine chamber (41) for receiving the film magazine; and
means (44) for detecting the surface exposed at the first region (24a) of the aperture means, and for selectively inhibiting loading of the film magazine when a said blocking surface (23h; 23k) is detected thereat, and allowing loading of the film magazine when a said non-blocking surface (23g; 23j) is detected thereat.

11. A combination of a film magazine as defined in claim 2 or 3, and film feeding apparatus, the film feeding apparatus comprising:
a magazine chamber (41) for receiving the film magazine; and
means (45) for detecting the surface exposed at the second region (24b) of the aperture means, and for selectively inhibiting loading of the film magazine when a said blocking surface (23h; 23k) is detected thereat, and allowing loading of the film magazine when a said non-blocking surface (23g; 23j) is detected thereat.

12. A combination of a camera and a film magazine, the camera and film magazine combination comprising a combination of a film feeding apparatus and a film magazine as defined in any of claims 7 to 11.

## Patentansprüche

1. Filmmagazin, mit
- einer drehbaren Filmspule (11) und
- einer Anzeigeeinrichtung, die ein Anzeigeelement (23) und Öffnungsmittel (24a; 24a, 24b) aufweist, wobei das Anzeigeelement und die Öffnungsmittel relativ zueinander bewegbar sind, um verschiedene Abschnitte des Anzeigeelements wahlweise freizugeben,
- wobei die verschiedenen Abschnitte des Anzeigeelements einen Abschnitt mit mindestens einer sperrenden Fläche (23f, 23e; 23h, 23k) und einen Abschnitt mit mindestens einer nicht sperrenden Fläche (23c, 23d; 23g, 23j) aufweisen und wobei die Anzeigeeinrichtung in einen ersten Zustand, in dem eine sperrende Fläche (23f; 23h; 23k) durch die Öffnungsmittel freigelegt ist, um anzuzeigen, daß der Film vollständig benutzt ist, in einen zweiten Zustand, in dem sowohl eine nicht sperrende Fläche (23d; 23g; 23j) als auch eine sperrende Fläche (23e; 23h; 23k) durch die Öffnungsmittel anstelle der im ersten Zustand freigelegten sperrenden Fläche freigelegt sind, um anzuzeigen, daß der Film teilweise benutzt ist, und in einen dritten Zustand einstellbar ist, in dem eine nicht sperrende Fläche (23c; 23g; 23j) durch die Öffnungsmittel freigelegt ist, um anzuzeigen, daß der Film vollständig unbenutzt ist,
- wodurch ein Laden des Filmmagazins (10) in eine Magazinaufnahmekammer in Abhängigkeit vom Zustand der Anzeigeeinrichtung mechanisch verhindert oder erlaubt werden kann.

2. Filmmagazin nach Anspruch 1, bei dem
die Öffnungseinrichtung ein erstes Freilegungsgebiet (24a) und ein zweites Freilegungsgebiet (24b) aufweist und wobei,
- wenn das Anzeigeelement (23) im ersten Zustand ist, das erste Freilegungsgebiet (24a) eine sperrende Fläche (23h; 23k) und das zweite Freilegungsgebiet (24b) eine sperrende Fläche (23h; 23k) freilegen,
- wenn die Anzeigeeinrichtung (23) im zweiten Zustand ist, das erste Freilegungsgebiet (24a) eine nicht sperrende Fläche (23g; 23j) und das zweite Freilegungsgebiet (24b) eine sperrende Fläche (23h; 23k) freilegen, und,
- wenn das Anzeigeelement (23) im dritten Zustand ist, das erste Freilegungsgebiet (24a) eine nicht sperrende Fläche (23g; 23j) und das zweite Freilegungsgebiet (24b) eine nicht sperrende Fläche (23; 23j) freilegen.

3. Filmmagazin nach Anspruch 2, bei dem
das erste und zweite Freilegungsgebiet eine erste und zweite diskrete Öffnung (24a, 24b) aufweisen, die in entsprechenden Positionen angeordnet sind.

4. Filmmagazin nach Anspruch 1, 2 oder 3, bei dem
das Anzeigeelement und die Öffnungsmittel durch Drehung der Spule relativ zueinander bewegbar sind.

5. Filmmagazin nach Anspruch 4, bei dem
das Anzeigeelement zur Drehung mit der Spule gekoppelt ist.

6. Filmmagazin nach einem vorhergenden Anspruch, bei dem
die oder jede nicht sperrende Fläche (23c; 23d; 23g; 23j) eine abgeschrägte Fläche aufweist.

7. Kombination eines Filmmagazins nach Anspruch 1, 2 oder 3 und einer Filmzuführvorrichtung, wobei die Filmzuführvorrichtung aufweist:
- eine Magazinkammer (41) zur Aufnahme des Filmmagazins und
- ein Verhinderungsmittel (44; 45; 91; 92) zum selektiven Verhindern des Ladens des Filmmagazins in die Magazinkammer in Abhängigkeit vom Zustand der Anzeigeeinrichtung.

8. Kombination eines Filmmagazins und einer Filmzuführvorrichtung nach Anspruch 7, bei der
das Verhinderungsmittel Mittel (44; 91) zum Verhindern eines Ladens des Filmmagazins in Verknüpfung mit der Erfassung einer im ersten Anzeigezustand durch die Anzeigeeinrichtung freigelegten sperrenden Fläche und zum Zulassen eines Ladens des Filmmagazins in Verknüpfung mit der Erfassung einer im zweiten oder dritten Anzeigezustand durch die Anzeigeeinrichtung freigelegten nicht sperrenden Fläche aufweist.

9. Kombination aus einem Filmmagazin und einer Filmzuführvorrichtung nach Anspruch 7, bei der
das Verhinderungsmittel Mittel (45; 92) zum Verhindern eines Ladens des Filmmagazins in Verknüpfung mit der Erfassung der im ersten oder zweiten Anzeigezustand durch die Anzeigeeinrichtung freigelegten sperrenden Fläche und zum Erlauben eines Ladens des Filmmagazins in Verknüpfung mit der Erfassung einer im dritten Anzeigezustand durch die Anzeigeeinrichtung freigelegten nicht sperrenden Fläche aufweist.

10. Kombination aus einem Filmmagazin nach Anspruch 2 oder 3 und einer Filmzuführvorrichtung, bei der die Filmzuführvorrichtung aufweist:
- eine Magazinkammer (41) zur Aufnahme des Filmmagazins und
- Mittel (44) zur Erfassung der im ersten Gebiet (24a) der Öffnungsmittel freigelegten Oberfläche und zum selektiven Verhindern eines Ladens des Filmmagazins, wenn dabei eine sperrende Fläche (23h; 23k) erfaßt wird, und zum Erlauben eines Ladens des Filmmagazins, wenn dabei eine nicht sperrende Fläche (23g; 23j) erfaßt wird.

11. Kombination aus einem Filmmagazin nach Anspruch 2 oder 3 und einer Filmzuführvorrichtung, bei der die Filmzuführvorrichtung aufweist:
- eine Magazinkammer (41) zur Aufnahme des Filmmagazins und
- Mittel (45) zur Erfassung der im zweiten Gebiet (24b) der Öffnungsmittel freigelegten Oberfläche und zum selektiven Verhindern eines Ladens des Filmmagazins, wenn dabei eine sperrende Fläche (23h, 23k) erfaßt wird, und zum Erlauben eines Ladens des Filmmagazins, wenn dabei eine nicht sperrende Fläche (23g; 23j) erfaßt wird.

12. Kombination aus einer Kamera und einem Filmmagazin, wobei
die Kombination aus Kamera und Filmmagazin eine Kombination aus einer Filmzuführvorrichtung und einem Filmmagazin nach einem der Ansprüche 7 bis 11 aufweist.

## Revendications

1. Magasin de film (10) comprenant:
une bobine de film rotative (11); et
Un moyen indicateur comprenant un élément indicateur (23) et un moyen formant ouverture (24a; 24a, 24b), l'élément indicateur et le moyen formant ouverture étant mobiles l'un par rapport à l'autre pour présenter sélectivement différentes parties de l'élément indicateur;
dans lequel les différentes parties de l'élément indicateur comprennent une partie ayant au moins une surface de blocage (23f, 23e; 23h; 23k) et une partie ayant au moins une surface de non blocage (23c, 23d; 23g; 23j), et dans lequel le moyen indicateur peut être fixé dans un premier état dans lequel une dite surface de blocage (23f, 23h; 23k) est présentée par le moyen formant ouverture pour indiquer que le film a été entièrement utilisé, dans un second état dans lequel à la fois une dite surface de non blocage (23d; 23g; 23j) et une dite surface de blocage, (23e; 23h; 23k) sont présentées par le moyen formant ouverture à la place de la surface de blocage présentée dans le premier état pour indiquer que le film est partiellement utilisé, et dans un troisième état dans lequel une dite surface de non blocage (23c; 23g; 23j) est présentée par le moyen formant ouverture pour indiquer que le film est totalement inutilisé;
d'où il résulte que le chargement du magasin de film (10) dans une chambre de réception de magasin peut être empêché ou autorisé mécaniquement, selon l'état du moyen indicateur.

2. Magasin de film selon la revendication 1, dans lequel le moyen formant ouverture comprend une première région de présentation (24a) et une seconde région de présentation (24b) et dans lequel:
lorsque l'élément indicateur (23) est dans ledit premier état, ladite première région de présentation (24a) présente une dite surface de blocage (23h; 23k) et ladite seconde région de présentation (24b) présente une dite surface de blocage (23h; 23k);
lorsque l'élément indicateur (23) est dans ledit second état, ladite première région de présentation (24a) présente une dite surface de non blocage (23g; 23j) et ladite seconde région de présentation (24b) présente une dite surface de blocage (23h; 23k); et
lorsque l'élément indicateur (23) est dans ledit troisième état, ladite première région de présentation (24a) présente une dite surface de non blocage (23g; 23j) et ladite seconde région de présentation (24b) présente une dite surface de non blocage (23g; 23j).

3. Magasin de film selon la revendication 2, dans lequel les première et seconde régions de présentation comprennent des première et seconde ouvertures discrètes (24a, 24b) placées à des positions correspondantes.

4. Magasin de film selon la revendication 1, 2 ou 3, dans lequel l'élément indicateur et le moyen de présentation sont mobiles l'un par rapport à l'autre par rotation de la bobine.

5. Magasin de film selon la revendication 4, dans lequel l'élément indicateur est couplé à la bobine pour tourner avec elle.

6. Magasin de film selon l'une quelconque des revendications précédentes, dans lequel la surface de non blocage ou chaque surface de non blocage (23c; 23d; 23g; 23j) comprend une surface convergente.

7. Combinaison d'un magasin de film selon la revendication 1, 2 ou 3, et d'un dispositif d'alimentation de film, le dispositif d'alimentation de film comprenant:
une chambre de magasin (41) pour recevoir le magasin de film; et
un moyen d'interdiction (44; 45; 91; 92) pour interdire sélectivement le chargement du magasin de film dans la chambre de magasin selon l'état du moyen indicateur.

8. Combinaison d'un magasin de film et d'un dispositif d'alimentation de film selon la revendication 7, dans laquelle le moyen d'interdiction comprend un moyen (44; 91) pour interdire le chargement du magasin de film en association avec la détection d'une dite surface de blocage présentée par le moyen indicateur dans le premier état d'indication, et pour permettre le chargement du magasin de film en association avec la détection d'une dite surface de non blocage présentée par le moyen indicateur dans le second ou dans le troisième état d'indication.

9. Combinaison d'un magasin de film et d'un dispositif d'alimentation de film, selon la revendication 7, dans laquelle le moyen d'interdiction comprend un moyen (45; 92) pour interdire le chargement du magasin de film en association avec la détection d'une dite surface de blocage présentée par le moyen indicateur dans le premier ou dans le second état d'indication, et pour autoriser le chargement du magasin de film en association avec la détection d'une dite surface de non blocage présentée par le moyen indicateur dans le troisième état d'indication.

10. Combinaison d'un magasin de film selon la revendication 2 ou 3, et d'un dispositif d'alimentation de film, le dispositif d'alimentation de film comprenant:
une chambre de magasin (41) destinée à recevoir le magasin de film; et
un moyen (44) destiné à détecter la surface présentée au niveau de la première région (24a) du moyen d'ouverture, et à interdire sélectivement le chargement du magasin de film lorsqu'une dite surface de blocage (23h; 23k) est détectée à ce niveau, et à autoriser le chargement du magasin de film lorsqu'une dite surface de non blocage (23g; 23j) est détectée à ce niveau.

11. Combinaison d'un magasin de film selon la revendication 2 ou 3, et d'un dispositif d'alimentation de film, le dispositif d'alimentation de film comprenant:
une chambre de magasin (41) destinée à recevoir le magasin de film; et
un moyen (45) destiné à détecter la surface présentée au niveau de la seconde région (24b) du moyen d'ouverture, et à interdire sélectivement le chargement du magasin de film lorsqu'une dite surface de blocage (23h; 23k) est détectée à ce niveau, et à autoriser le chargement du magasin de film lorsqu'une dite surface de non blocage (23g; 23j) est détectée à ce niveau.

12. Combinaison d'un appareil photographique et d'un magasin de film, la combinaison de l'appareil photographique et du magasin de film comprenant une combinaison d'un dispositif d'alimentation de film et d'un magasin de film selon l'une quelconque des revendications 7 à 11.
